# EUROPÄISCHE PATENTSCHRIFT

(11) **EP 2 558 886 B1**
(45) Veröffentlichungstag und Bekanntmachung des Hinweises auf die Patenterteilung: **05.03.2014**
(21) Anmeldenummer: 11715665.3
(22) Anmeldetag: 15.04.2011
(51) Int. Cl.: G01V 8/10, F16P 3/14

(54) **EINRICHTUNG ZUR ÜBERWACHUNG MINDESTENS EINES DREIDIMENSIONALEN SICHERHEITSBEREICHS**
DEVICE FOR MONITORING AT LEAST ONE THREE-DIMENSIONAL SAFETY AREA
DISPOSITIF DE SURVEILLANCE D'AU MOINS UNE ZONE DE SÉCURITÉ TRIDIMENSIONNELLE

(30) Priorität: 16.04.2010 DE 102010015765
(43) Veröffentlichungstag der Anmeldung: 20.02.2013
(73) Patentinhaber: Fraunhofer-Gesellschaft zur Förderung der angewandten Forschung e.V., 80686 München (DE); Otto-von-Guericke-Universität Magdeburg, 39106 Magdeburg (DE)
(72) Erfinder: WALTER, Christoph, 39106 Magdeburg (DE); VOGEL, Christian, 39104 Magdeburg (DE); ELKMANN, Norbert, 39104 Magdeburg (DE)
(74) Vertreter: Pfenning, Meinig & Partner GbR
(86) Internationale Anmeldenummer: PCT/EP2011/001967
(87) Internationale Veröffentlichungsnummer: WO 2011/128117

(56) Entgegenhaltungen:
- DE-A1- 19 938 639
- US-A1- 2001 041 077
- US-A1- 2002 150 278
- US-A1- 2003 075 675

## Beschreibung

Die Erfindung betrifft eine Einrichtung zur Überwachung mindestens eines dreidimensionalen Sicherheitsbereichs, insbesondere eines Raums in gemeinsamen Arbeitsbereichen von Menschen und Maschinen, nach dem Oberbegriff des Hauptanspruchs.

In Arbeitsräumen, in denen Menschen und Maschinen, insbesondere auch Roboter wirken, muss zu jedem Zeitpunkt ausgeschlossen werden, dass sich die Menschen beispielsweise durch Kollisionen mit der Maschine bzw. dem Roboter Verletzungen zuziehen. Für die Verhinderung derartiger Kollisionen werden Sicherheitsbereiche definiert, in denen eine potentielle Verletzungsgefahr für den Menschen besteht.

Zur Etablierung von Sicherheitsbereichen werden bisher unterschiedliche Verfahren bzw. Vorrichtungen eingesetzt, beispielsweise trennende Schutzeinrichtungen in Kombination mit mechanischen Systemen, wie Schaltmatten, Türöffner oder dergleichen, optische Systeme, wie Laserscanner, Lichtschranken, Lichtvorhänge oder optische bildverarbeitende Systeme.

Trennende Schutzeinrichtungen umhausen den Sicherheitsbereich des Roboters und stellen somit eine unüberwindbare Grenze zwischen Mensch und Maschine dar. Schnittstellen zum Sicherheitsbereich werden durch Sensoren abgesichert und deaktivieren den Roboter bei der Objektdetektion. Kollisionen zwischen Mensch und Maschine sind somit ausgeschlossen. Die Nachteile dieser Umhausungen sind der hohe Installationsaufwand, Inflexibilität und großflächiger Platzbedarf. Auch ist eine direkte Interaktion mit dem Roboter aufgrund der Trennwände nicht oder nur eingeschränkt möglich.

Sensorische Überwachungslösungen arbeiten auf dem Prinzip, dass in dem relevanten Arbeitsraum Personen bzw. Objekte sensorisch erfasst werden. Das Eindringen von Objekten oder Personen in sicherheitskritische Bereiche des Arbeitsraums, d.h. in Bereiche, in denen sich Teile des Roboters oder der Maschine bewegen, wird dann mit Hilfe der gewonnen Daten erfasst. Als Reaktion auf eine solche Situation kann danach beispielsweise das Anhalten der Anlage erfolgen.

In den letzten Jahren sind vermehrt Veröffentlichungen hinsichtlich des Einsatzes optischer, bildverarbeitender Systeme zur Überwachung von Sicherheitsbereichen erschienen. Dabei kommen Multi-Kamerasysteme, Stereo-Kameras oder Time-Of-Flight-Kameras (PMD-Kameras) zum Einsatz.

Aus der WO 2008/061607 A1 ist ein Verfahren und eine Vorrichtung zum Überwachen eines dreidimensionalen Raumbereichs bekannt, bei denen zwei Kameras einen Sicherheitsbereich überwachen, die so zueinander angeordnet und ausgerichtet sind, dass eine stereoskopische dreidimensionale Bildaufnahme möglich wird oder beide Bildaufnahmeeinheiten redundant zueinander arbeiten, ohne dass eine stereoskopische Bildaufnahme stattfindet. Wenn aufgrund der dreidimensionalen Bildaufnahme eine Gefahrensituation erkannt wird, wird ein in dem Sicherheitsbereich arbeitender Roboter abgeschaltet.

Aus der US 2002/0150278 A1 ist ebenso ein Verfahren und eine Vorrichtung zum Überwachen eines dreidimensionalen Raumbereichs bekannt.

Ein weiteres Verfahren, das in der WO 2007/085330 A1 offenbart ist, umgeht die Generierung von 2 1/2 D-bzw. 3 D-Abbildern der Umgebung und definiert den Sicherheitsbereich durch statische Markierungen auf dem Boden. Mit Hilfe von fest installierten Kameras werden Überschreitungen dieser Markierungen von Menschen bzw. Objekten erkannt und Sicherheitsbereichsverletzungen festgestellt. Da die Sicherheitsbereiche stets manuell durch entsprechende Markierungen aufwendig definiert werden müssen, ist dieses Verfahren bzw. die entsprechende Vorrichtung nicht flexibel handhabbar.

Der Erfindung liegt daher die Aufgabe zugrunde, eine Einrichtung zur Überwachung mindestens eines dreidimensionalen Sicherheitsbereichs zu schaffen, die eine schnelle Anpassung an dynamische, d.h. aktivierbare und deaktivierbare sowie in ihrer Ausdehnung und/oder Gestaltung änderbare Sicherheitsbereiche möglich macht, und die keine komplexe und rechenintensive Verarbeitung für die Analyse der von einer Bildaufnahmevorrichtung erstellten Daten zulässt, d.h. eine Auswertung in Echtzeit benötigt.

Diese Aufgabe wird erfindungsgemäß durch die kennzeichnenden Merkmals des Hauptanspruchs in Verbindung mit den Merkmalen des Oberbegriffs gelöst.

Durch die in den Unteransprüchen angegebenen Maßnahmen sind vorteilhafte Weiterbildungen und Verbesserungen möglich.

Dadurch, dass mindestens ein Projektor in Bezug auf einen Überwachungsbereich derart angeordnet ist, dass er den Sicherheitsbereich definierende Markierungen als moduliertes Licht mit vorgegebener Frequenz, z.B. auf den Boden des Überwachungsbereichs projiziert und dass die Auswertevorrichtung die Abbilder auf Unterbrechung oder Änderungen der Form und/oder Größe und/oder Position der Markierungen auswertet, wird eine Überwachungseinrichtung zur Verfügung gestellt, bei der der oder die Sicherheitsbereiche ohne großen Aufwand verändert werden können. Dabei ist die Aufnahmevorrichtung auf die vorgegebene Frequenz abgestimmt und die Auswertevorrichtung ist ausgebildet, aus den aufgenommenen Abbildern ein binäres Ist-Abbild des Sicherheitsbereichs mit einem für die mindestens eine Aufnahmevorrichtung bestimmten binären Soll-Abbild des projizierten Sicherheitsbereichs zu vergleichen. Da keine Auswertung von 2 1/2 D- bzw. 3 D-Abbildern der Umgebung notwendig ist, sondern die Abbilder auf Unterbrechung oder Lichtänderung der Markierungen ausgewertet werden, kann auf komplexe, rechenintensive Algorithmen für die Analyse bzw. Datenverarbeitung der Sensordaten, d.h. der Daten der Aufnahmevorrichtung verzichtet werden. Für die Erkennung von Sicherheitsbereichsverletzungen können einfache Bildverarbeitungsoperationen, wie Addition, Subtraktion von zeitlich aufeinanderfolgenden Pixelwerten genutzt werden, es kann somit Rechenaufwand gespart werden. Zur Detektion von Schutzraumverletzungen kann ein Algorithmus gewählt werden, der eine deterministische und für eine bestimmte Konfiguration konstante Laufzeit besitzt und somit in Echtzeitsystemen umsetzbar ist. Im bevorzugten Ausführungsbeispiel sind der mindestens eine Projektor und die mindestens eine Aufnahmevorrichtung ausgebildet, abwechselnd ein Abbild des Überwachungsbereichs mit projiziertem Sicherheitsbereich und ein Abbild des Überwachungsbereichs ohne projizierten Sicherheitsbereich zu erstellen.

Das binäre Soll-Abbild als virtuelles Soll-Abbild kann über die Kenntnis der bekannten Position und Ausrichtung und mittels der Parameter des projizierten Sicherheitsbereichs von der Auswertevorrichtung bestimmt bzw. berechnet werden.

Vorzugsweise kann dann das binäre Ist-Abbild durch Addition bzw. Subtraktion der aufeinanderfolgenden Abbilder des Überwachungsbereichs mit und ohne projiziertem Sicherheitsbereich bestimmt werden und in entsprechender Weise kann eine Verletzung des Sicherheitsbereichs, aber auch eventuelle Defekte oder Dejustierungen des Projektors und/oder der Aufnahmevorrichtung (bei Nichtverletzung des Sicherheitsbereichs) durch Addition bzw. Subtraktion des binären Ist-Abbildes und des binären virtuellen Soll-Abbilds, bestimmt werden.

Für den mindestens einen Projektor und für die Aufnahmevorrichtung können im Wesentlichen handelsübliche Techniken eingesetzt werden. Die erfindungsgemäße Überwachungseinrichtung kann durch Einsatz beliebig vieler Projektoren und Aufnahmevorrichtungen den jeweiligen Bedürfnissen individuell angepasst werden, so dass sie sowohl zur Überwachung einzelner kleiner Sicherheitsbereiche als auch größerer bzw. mehrerer verteilter Sicherheitsbereiche gleichermaßen eingesetzt werden kann.

Es können unterschiedliche Arten von Projektoren und Aufnahmevorrichtungen, wie Projektoren, deren ausgeendetes Licht weiß und/oder farbig und für den Menschen sichtbar oder nicht sichtbar sein kann und Aufnahmevorrichtungen, die an dieses Licht angepasst sind, verwendet werden.

Dynamische Änderungen der jeweiligen Sicherheitsbereiche, wie Position und Größe durch Anpassen an den aktuellen Arbeitsschritt der Maschine auch an die aktuelle Gefahrenlage durch sie können berücksichtigt werden.

Durch die Verwendung von in der Helligkeit und/oder Farbe moduliertem Licht mit einer bestimmten Modulationsfrequenz sind die Markierungen sicher von Umgebungslicht, das gegebenenfalls auch etwas moduliert sein, unterscheidbar. Die Markierungen bzw. Muster sind in dem bevorzugten Ausführungsbeispiel als von dem mindestens einen Projektor projizierte Begrenzungen, die als Linien und/oder Muster realisiert sind, ausgebildet.

Weiterhin ist es in bestimmten Situationen vorteilhaft, dass die projizierten Linien oder Muster zeitlich und/oder hinsichtlich ihrer Form und/oder hinsichtlich ihrer Darstellungsweise veränderbar sind. Dies bedeutet, dass zusätzlich bzw. unter Verwendung zu dem Einsatz von in seiner Intensität oder Farbe moduliertem oder gepulstem Licht mit sich zeitlich verändernden eindeutigen Mustern bzw. Markierungen, welche projiziert werden, gearbeitet werden kann. Die Darstellung bzw. Form der Markierungen kann hierbei unterschiedlich sein, z.B. können Zahlen, Buchstaben, Zeichen/Strukturen aller Art projiziert werden, sie können blinkend, farbändernd, als Laufbandeffekt oder dergleichen vorgesehen werden.

Zusätzlich zu den auf den Boden des zu sichernden Bereichs projizierten Linien und/oder Mustern können Informationen in Form einer Lichtschrift oder in Form von Lichtpiktogrammen projiziert werden, d.h., dass nicht nur der Grenzbereich des Arbeitsraums oder Sicherheitsbereich den Personen visuell verdeutlicht wird, sondern es können auch weitere Informationen dargestellt werden. Ein Beispiel für solche Informationen ist eine Anzeige, wie lange der Bereich noch gesperrt sein wird, bzw. wann er für Personen wieder betretbar ist. Auch können zusätzliche Informationen, die nichts mit dem Sicherheitsbereich zu tun haben, wie Statusinformationen der Anlage bzw. des Roboters, aktueller und folgender Arbeitsschritt usw. durch Einblendung angezeigt und so dem Bedienpersonal bereitgestellt werden.

Bei einem besonders vorteilhaften Ausführungsbeispiel können mehrere räumliche Sicherheitsbereiche, die ineinander verschachtelt sind oder sich miteinander schneiden, projiziert werden. Beispielsweise kann ein Warnfeld als Sicherheitsbereich projiziert werden, in dem das eigentliche, kleinere Schutzfeld eingebettet ist. Auch für dieses Ausführungsbeispiel sind als minimale Ausstattung nur ein Projektor und eine Aufnahmevorrichtung notwendig, es können jedoch jeweils auch mehrere verwendet werden.

Als vorteilhaftes Ausführungsbeispiel kann das Licht des mindestens einen Projektors im Infrarotbereich liegen. Diese Variante umfasst somit die Projektion von für den Menschen nicht sichtbarem Licht, wobei eine zugeordnete Aufnahmetechnik (z.B. Infrarotkamera) gewählt werden muss. Dieses Ausführungsbeispiel kommt zum Einsatz, wenn der Mensch nicht über den Arbeitsraum bzw. den Sicherheitsbereich in Kenntnis gesetzt werden soll oder muss.

Die erfindungsgemäße Einrichtung kann durch beliebig viele Projektoren und Aufnahmevorrichtungen den individuellen Bedürfnissen angepasst werden. Sie kann somit sowohl zur Überwachung einzelner, kleiner Sicherheitsbereiche, als auch für größere bzw. mehrere verteilte Sicherheitsbereiche gleichermaßen eingesetzt werden, wobei das gleichzeitige Anordnen mehrerer Aufnahmevorrichtungen um das Projektionsfeld herum die Wahrscheinlichkeit, dass verdeckte Bereiche auftreten können, vermindert. Die Anzahl der verwendeten Projektoren und Kameras kann gleich oder unterschiedlich sein.

Durch die Verwendung mehrerer Projektoren kann der Sicherheitsbereich anteilsmäßig derart auf die Projektoren aufgeteilt werden, dass jeder Projektor einen Teil des Sicherheitsbereiches projiziert, wodurch insgesamt der gesamte Sicherheitsbereich projiziert wird. Dies kann besonders in Fällen notwendig sein, in denen der Einsatz eines einzelnen Projektors zur Projektion eines Sicherheitsbereiches um eine Maschine, aufgrund deren baulicher Ausmaße nicht ohne Einschränkungen möglich ist.

Durch die Verwendung mehrerer Aufnahmevorrichtungen kann ein oder mehrere Sicherheitsbereich(e) redundant überwacht werden und/oder die Aufnahmevorrichtungen anteilsmäßig derart zur Überwachung des Sicherheitsbereiches aufgeteilt werden, dass insgesamt der gesamte Sicherheitsbereich überwacht wird.

Der Einsatz als Überwachungseinrichtung ist überall denkbar, wo ein definierter Bereich besonderer Aufmerksamkeit bedarf. Dies sind vor allem Bereiche zum Schutz des Menschen, z.B. bei bestehender Verletzungsgefahr, zur Sicherung vor unbefugtem Betreten, z.B. gegen Diebstahl, zur Sicherung vor unbefugtem Verlassen und zur speziellen Visualisierung, z.B. zur Darstellung von Gefahrenpotentialen. Die Bereiche zum Schutz des Menschen stellen in erster Linie Sicherheitsbereiche bei der Mensch/Roboter-Interaktion dar. Der Sicherheitsbereich wird hierbei um den Roboter festgelegt und führt bei einer Verletzung zu einer definierten Reaktion, z.B. zum Notstop des Roboters. Die Bereiche zur Sicherung vor unbefugtem Betreten sollen allgemein gegenüber anderen Personen oder Objekten abgesichert werden. Dies kann den Schutz vor einer möglichen Gefahr, wie z.B. das vorübergehende Vorhandensein einer gesundheitsgefährdenden Substanz, aber auch z.B. den Schutz von Eigentum gegenüber Diebstahl betreffen. Zur speziellen Visualisierung benötigen Bereiche eine besondere Darstellung von Informationen. Durch blinkende, farbändernde dynamische Projektionen von Bildern, Mustern oder Strukturen sind jedwede individuellen Repräsentationen, wie zukünftige Bewegung, Richtungsänderung, Status eines Objekts bzw. Roboters realisierbar.

Die erfindungsgemäße Einrichtung kann als feststehende Einrichtung ausgebildet sein, aber auch mobil eingesetzt wer den. Projektor und Aufnahmevorrichtung, z.B. Kamera können an jeglichen mobilen Systemen, wie einem mobilen Roboter, angebracht werden. Sie kann auch am bzw. nahe des TCP (tool center point) am Roboter angebracht werden und somit Bewegungsbereiche bewegter bzw, mobiler Systeme absichern.

Die Eigenschaften der erfindungsgemäßen Einrichtung betreffen die Reduzierung von Umwelteinflüssen, wie z.B. sich ändernde Lichtbedingungen oder plötzlicher Schatten, auf die Detektionsgenauigkeit /-robustheit und die Überwachung der Komponenten (Aufnahmevorrichtungen und Projektoren) auf ihre Funktionstüchtigkeit (Eigensicherheit). Weiterhin bietet die Erfindung die Möglichkeit, Sicherheitsbereiche in Form, Position, und Größe während und ohne Unterbrechung des Maschinenbetriebs zu ändern und gleichzeitig zu überwachen. Die Änderung kann dabei manuell oder aber im Besonderen dynamisch in Abhängigkeit verschiedener Parameter wie zum Beispiel Maschinen-Position und Maschinen-Trajektorie erfolgen und z.B. an Robotersteuerung angebunden werden.

Desweiteren unterliegen die Sicherheitsbereiche bei der Erfindung kaum Einschränkungen. Es sind keine besonderen Formen, geometrische Strukturen, Farben oder andere Merkmale (z.B. Schwerpunkt, Gradienten,..) vorgegeben. Sicherheitsbereiche bestehen aus einzelnen geometrischen Elementen, wie z.B. Punkte, Linien oder Kreise, die durch Kombination verschiedener Längen und Breiten beliebige komplexe Formen annehmen können. Die Sicherheitsbereiche müssen nicht aus geschlossenen Linienzügen bestehen. Es sind genauso auch einzelne Punkte und einzelne Linien möglich. Flächige oder teilflächige Überwachungen, also Sicherheitsbereiche, bei denen nicht nur die den Sicherheitsbereich begrenzende Linie überwacht wird, sondern auch der gesamte oder partielle Innenbereich, können ebenfalls realisiert werden. Ebenso können Sicherheitsbereiche aus Kombinationen der genannten Formen, wie z.B. Punkten, einzelnen Linien und (teil-)flächigen Bereichen bestehen.

Vorteilhaft ist, dass Defekte der Aufnahmevorrichtung und/oder des Projektors festgestellt werden können. Wenn ein Projektor und/oder Aufnahmevorrichtung defekt ist oder wenn diese Komponenten nicht mehr exakt zueinander ausgerichtet sind, führt das ebenfalls zur Detektion einer Verletzung des Sicherheitsbereiches. Durch die Kalibrierung von Aufnahmevorrichtung und Projektor ist das projizierte Bild im Bild der Aufnahmevorrichtung "bekannt", eine Verletzung des Sicherheitsbereichs durch Objekte, defekte Komponenten (Aufnahmevorrichtung/Projektor) oder fehlerhafte Ausrichtung Aufnahmevorrichtung/Projektor führen zu einem "Verletzungssignal". Umgekehrt bedeutet dies, dass bei einer Nicht-Detektion einer Verletzung die Komponenten einwandfrei funktionieren und weiterhin exakt zueinander ausgerichtet sind. Dies stellt einen wesentlichen Vorteil bezüglich der Eigensicherheit des Systems dar.

Die erfindungsgemäße Einrichtung erlaubt eine dynamische Anpassung des Sicherheitsbereichs in Echtzeit, so kann z.B. ein einen Roboter umgebender Sicherheitsbereich so angepasst werden, dass er unter Berücksichtigung der Roboterbewegung für den Menschen in seinem Bewegungsfreiraum immer optimal ausgeführt ist.

Ein Ausführungsbeispiel der Erfindung ist in der Zeichnung dargestellt und wird in der nachfolgenden Beschreibung näher erläutert. Es zeigen:

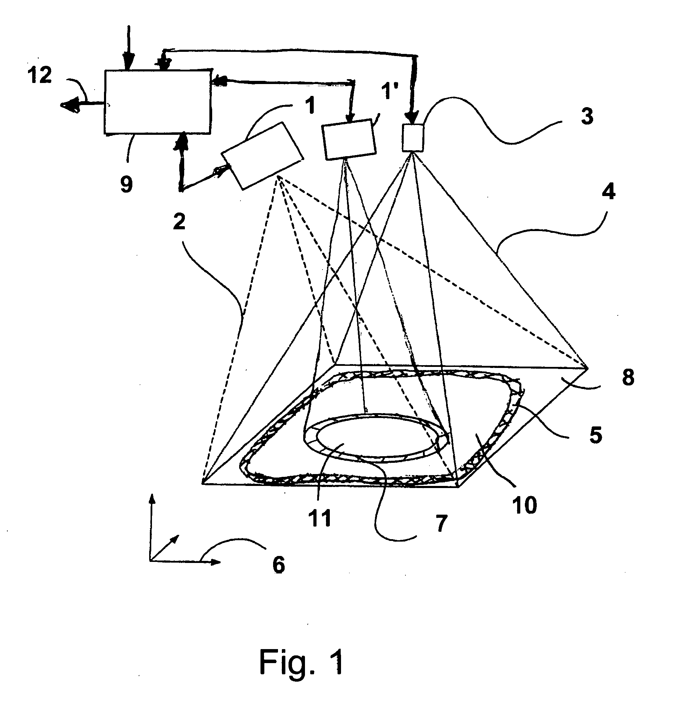

- Fig. 1: eine schematische Darstellung der erfindungsgemäßen Einrichtung zur Überwachung mit projizierten Sicherheitsbereichen;
- Fig. 2: schematisch einen Sicherheitsbereich mit Projektor und Aufnahmevorrichtung mit Lichtstrahl (a) und Sichtstrahl (b) ohne und mit Unterbrechung des Sichtstrahls,
- Fig. 3: schematisch einen Sicherheitsbereich mit Projektor und Aufnahmevorrichtung mit Lichtstrahl und Sichtstrahl mit unterbrochenem Lichtstrahl und veränderter Pixelposition des korrespondierenden Sichtstrahls in der Bildebene der Aufnahmevorrichtung.

Die erfindungsgemäße Überwachungseinrichtung umfasst mindestens einen Projektor, im dargestellten Ausführungsbeispiel zwei Projektoren 1, 1' und mindestens eine Aufnahmevorrichtung, die im Ausführungsbeispiel als Kamera 3 ausgebildet ist, und die oberhalb eines Erfassungsbereichs 8 ortsfest angeordnet sind. Der Schnittbereich zwischen einem Sichtbereich 4 der Kamera 3 und einem Projektionsbereich 2, hier des Projektors 1, definieren diesen Erfassungsbereich 8. Die Projektoren 1, 1' und die Kamera 3 sind dabei zu einem schematisch dargestellten Weltkoordinatensystem 6 kalibriert.

Die Kamera 3 und die Projektoren 1, 1' sind mit einer Auswerteeinrichtung 9 verbunden, die eine Ansteuereinheit umfasst, wobei die Ansteuereinheit die Projektoren 1, 1' zum Projizieren von Markierungen 5, 7 ansteuert. Die Markierungen 5, 7 bilden Begrenzungen für Sicherheitsbereiche 10, 11, wobei der Sicherheitsbereich 11 innerhalb des Sicherheitsbereichs 10 liegt. Die Markierungen 5, 7 sind linienförmig ausgebildet und weisen im vorliegenden Ausführungsbeispiel zwei unterschiedliche Muster auf, welche ausschließlich als zusätzliche Information zur Unterscheidung der Sicherheitsbereiche für den Nutzer dienen.

Damit die projizierten Linien und Muster für die Kamera 3 auch bei Vorhandensein von Fremdlicht eindeutig zugeordnet werden können, wird mit moduliertem Licht gearbeitet, wobei die Modulation auf der Grundlage von Helligkeitsänderungen und/oder Farbänderungen durchgeführt werden kann. Dazu sind den Projektoren 1, 1' entsprechende Modulatoren zugeordnet, die von der in der Auswerteeinheit 9 vorhandenen Ansteuereinheit angesteuert werden.

Die Kamera 3 nimmt Abbilder oder Bilder des Sicherheitsbereichs 10, 11 bzw. des Erfassungsbereichs 8 auf und gibt sie an die Auswerteeinheit 9 weiter. Diese umfasst ein einfaches Bildverarbeitungsprogramm, das auf relativ einfachen Algorithmen für die Analyse der als Pixeln vorliegenden Kameradaten basiert. Dieser verwendete Algorithmus ist ein deterministischer Algorithmus, wobei er für eine bestimmte Konfiguration der aufgenommenen Bilder eine konstante Laufzeit aufweist.

Wenn eine Person oder ein Objekt in die Sicherheitsbereiche 10, 11 eindringt, werden an entsprechender Stelle die Projektionsstrahlen vom Projektor 1 oder vom Projektor 1' unterbrochen und diese Unterbrechung wird in der Auswerteeinheit 9 unter Verwendung der aufgenommenen Bilder festgestellt, dahingehend, dass die auf den Boden der Sicherheitsbereiche 10, 11 projizierten Begrenzungslinien sich in den Bildern ändern oder ganz verschwinden. Es werden dabei unter anderem die unterschiedlichen Helligkeiten und/oder die unterschiedlichen Farben einer Folge von Bildern ausgewertet.

Im dargestellten Ausführungsbeispiel sind in den Sicherheitsbereichen 10, 11 keine Gegenstände dargestellt, beispielsweise können in diesen Bereichen Roboter oder andere Maschinen aufgestellt werden, mit denen Kollisionen vermieden werden sollen. Um eine Abschattung der Begrenzungen durch etwaige Roboter oder Maschinen zu vermeiden, ist es sinnvoll, mehrere Projektoren und mehrere Kameras oder sonstige Aufzeichnungsgeräte über den Sicherheitsbereichen anzuordnen, wobei sich dabei selbstverständlich auch der Erfassungsbereich ändert. Auf diese Weise ist es möglich, die Sicherheitsbereiche vollständig abzusichern.

Falls ein Eindringen einer Person oder eines Objekts durch die Auswerteeinheit 9 festgestellt wird, werden ein oder mehrere Ausgangssignale 12 erzeugt, die zu Warneinrichtungen oder Nothalt-Einrichtungen geliefert werden können.

Die Auswerteeinheit kann auch mit einer Steuerung für eine im Sicherheitsbereich vorhandene Maschine verbunden sein und abhängig von Steuerparametern der Maschine den Sicherheitsbereich in seinen Abmessungen und Formen an die Sicherheitsbedingungen anpassen.

Wie schon erwähnt, wird die Aufnahmevorrichtung bzw. die eine Kamera oder die mehreren Kameras auf das Weltkoordinatensystem ausgerichtet, d.h. sie wird bzw. werden extrinsisch kalibriert. Mittels dieser extrinsischen Kalibrierung können Funktions- bzw. Selbsttests sowohl mit dem oder den Projektoren und/oder der oder den Kameras permanent durchgeführt werden, um deren einwandfreie Funktionsweise festzustellen, da es grundsätzlich bekannt ist, welche Markierungen/Muster/Linien an welcher Stelle in dem Kamerabild erscheinen muss. Somit kann ein Ausfall oder Fehler der Kamera- oder der Projektoranordnung in einfacher Weise nach vorheriger extrinsischer Kalibrierung festgestellt werden.

Im Folgenden soll das Detektionsprinzip der erfindungsgemäßen Einrichtung genauer beschrieben werden.

Die projektionsbasierte Überwachungseinrichtung mit dynamischen Sicherheitsbereich(en) und gegebenenfalls Fremdlichtunterdrückung umfasst folgende Merkmale, die einzeln oder gemeinsam vorhanden sein können:
1. Der Projektor 1, 1' sendet moduliertes Licht mit einer definierten Frequenz aus. Dies geschieht in pulsierender Weise, so dass abwechselnd die den Sicherheitsbereich 10, 11 definierenden Linien projiziert/ nicht projiziert werden. Dabei ist die Frequenz theoretisch auch während des Betriebs einstellbar, im Ausführungsbeispiel sind z.B. 120 Hz realisiert (für das menschliche Auge "stehende" Projektion, keine Flimmereffekte). Die beschriebene abwechselnde Bildaufnahme von Bildern mit projiziertem Sicherheitsbereich und ohne projizierten Sicherheitsbereich führt zu einer Reduzierung des Einflusses von Lichtänderungen, wie künstliche Lichtquellen oder plötzlicher Schatten. Dies basiert auf der Tatsache, dass die Zeitdifferenz zwischen den Zeitpunkten der Bildaufnahme hinreichend klein ist.
2. Die zumindest eine Kamera 3 wird auf die jeweilige Frequenz derart synchronisiert, dass diese abwechselnd Bilder aufnimmt, die eine Projektion bzw. Nicht-Projektion enthalten. Auf Basis zweier aufeinanderfolgender Bilder, also Bilder die eine Projektion/ Nicht-Projektion oder umgekehrt enthalten, wird ein Differenzbild erstellt, welches ein binäres Bild ist, das nur an den Pixelpositionen "1" enthält, an denen eine Projektion detektiert wird. Dieses Differenzbild repräsentiert während des Betriebs den aktuellen Sicherheitsbereich (Ist-Abbild des projizierten Sicherheitsbereiches).
3. Auf Basis der exakt zueinander ausgerichteten Komponenten bestehend aus zumindest einer Kamera und zumindest eines Projektors wird ein für jede Kamera virtuelles Referenzbild bestimmt. Dieses (binäre) Referenzbild (Soll-Abbild des projizierten Sicherheitsbereiches) definiert alle Pixelpositionen mit "1", an denen eine Projektion erwartet wird.
4. Durch einen Vergleich der Bilder von Ist-Zustand und Soll-Zustand des Sicherheitsbereiches, werden Verletzungen des Sicherheitsbereiches bei detektierten Unterschieden zwischen den beiden Bildern erkannt.

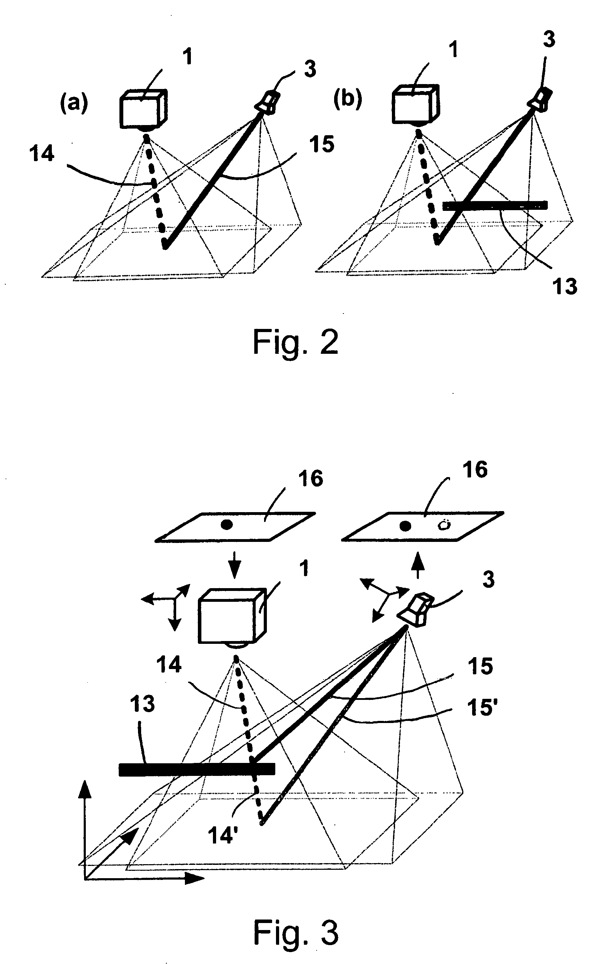

In den Fign. 2 und 3 ist noch einmal schematisch die Anordnung der erfindungsgemäßen Einrichtung mit Strahlengängen ohne und mit Verletzung des Sicherheitsbereichs dargestellt.

Die Anordnung beruht auf dem Arbeitsprinzip von Lichtschranken, wobei mögliche Sicherheitsbereiche hier nicht näher dargestellt sind, sondern lediglich Strahlengänge. Jedes Lichtpixel des Projektors 1, der beispielsweise mit MEMS-Spiegelelementen ausgerüstet sein kann, kann als Teil einer Lichtschranke angesehen werden, die Licht emittiert, das durch die Umgebung reflektiert und von der Kamera als weiteres Teil der Lichtschranke empfangen wird. Mit gestrichelten Linien in den Figuren ist ein Lichtstrahl 14, der am Boden reflektiert wird, und mit durchgezogenen Linien ist der entsprechende Sichtstrahl 15 der Kamera 3 bezeichnet. Längs dieser zwei Strahlen 14, 15 kann eine Unterbrechung auftreten (siehe Fig. 2(b), Lichtstrahlunterbrechung durch ein Objekt 13), wobei die Kamera 3 nicht erkennen kann, ob der Lichtstrahl 14 oder der Sichtstrahl 15 unterbrochen wird.

In Fig. 3 ist das Objekt 13 in den Lichtstrahl 14 eingebracht, der als Sichtstrahl 15 reflektiert und von der Kamera 3 empfangen wird, wobei nicht erkannt werden kann, ob der empfangene Strahl sich an der "richtigen" Position in der Kamerabildebene 16 befindet. Mit 14' und 15' sind die entsprechenden unterbrochenen Strahlen in grauen Linien bezeichnet, deren Bildpunkt in der Bildebene 16 als Kreis zu erkennen ist. Durch die oben aufgeführte Auswertungsweise wird dieser Zustand berücksichtigt, indem die Bild- oder Pixelpositionen der Lichtstrahlen bzw. Sichtstrahlen im aktuellen Kamerabild mit den Positionen verglichen werden, die die Strahlen bzw. Pixel eigentlich haben sollen.

Unter Berücksichtigung der obigen Ausführungen kann neben der Verletzung des Sicherheitsbereichs auch festgestellt werden, ob der bzw. die Projektor(en) 1, 1' und die Kamera(s) 3 funktionsfähig sind oder dejustiert sind.

Bei der Auswertung gibt es verschiedene Szenarien. Wenn der Projektor oder Elemente desselben defekt sind, werden keine oder nicht alle für die Projektion vorgesehenen Lichtstrahlen ausgesandt. Die Kamera empfängt in entsprechender Weise keine Sichtstrahlen. Dies entspricht dem Fall, dass sich ein Objekt "vor" dem Projektor befindet. Durch die Addition bzw. Subtraktion der Bilder mit und ohne Projektion (Ist-Abbild) und Differenzbildung von Ist- und Soll-Bilder wird ein Pixelbild extrahiert, das aussagt, dass das Ist-Bild nicht mit den entsprechenden Soll-Bild übereinstimmt, was ein Zeichen für eine Verletzung des Sicherheitsbereichs ist.

Ein zweiter Fall ist, dass die Kamera teilweise defekt ist, was einem Gegenstand "vor" der Kamera entspricht. Es tritt dann der Zustand nach Fig. 2(b) auf. Das Objekt unterbricht ganz oder teilweise die von der Kamera erfassten Sichtstrahlen. Das Ist-Abbild enthält korrespondierende Lücken im Pixelbild und es stimmt nicht mit dem erwarteten Soll-Abbild überein. Dies kann Zeichen einer Verletzung des Sicherheitsbereichs, aber auch Anzeichen einer defekten Kamera sein.

Ein dritter Fall ist gegeben, wenn das System dekalibriert ist, d.h. die Projektor- und/oder die Kameraposition stimmen nicht mehr mit den vorher berechneten überein. Da das Soll-Abbild auf der Berechnung der intrinsischen und extrinsischen Parameter der Kamera basiert, ist das Ist-Abbild zum Soll-Abbild verschoben.

Das Soll-Abbild einer Aufnahmevorrichtung basiert zum einen auf den extrinsischen und intrinsischen Parametern der Aufnahmevorrichtung und zum anderen auf der Konfiguration (Form, Position, Größe) des Sicherheitsbereiches. Dieses Soll-Abbild ist somit nur so lange zulässig, wie keinerlei Änderungen an der Sicherheitsbereichs- Konfiguration vorgenommen werden. Sobald der Sicherheitsbereich angepasst wird (z.B. Änderung der Position), z.B. dynamisch aufgrund einer Roboterbewegung, muss ein neues Soll-Abbild unter Berücksichtigung der geänderten Sicherheitsbereichs- Konfiguration bestimmt werden und ist wiederum nur für genau diese gültig.

Es ist nicht möglich, zwischen einer Verletzung des Sicherheitsbereiches und einem Defekt des Projektors zu unterscheiden. Erst wenn zu einem späteren Zeitpunkt wieder eine Nicht-Verletzung des Sicherheitsbereiches detektiert wird, kann daraus geschlossen werden, dass es sich womöglich um eine Verletzung des Sicherheitsbereiches gehandelt hat. Es ist jedoch theoretisch genauso möglich, dass ein temporärer Defekt des Projektors vorgelegen hat oder das System zeitweise dekalibriert war. Bei einer Detektion einer Verletzung ist nicht direkt ersichtlich, ob ein Objekt in den Sicherheitsbereich eingedrungen ist, ein Defekt (Kamera/ Projektor) vorliegt oder die Komponenten (Kamera/ Projektor) nicht mehr genauestens zueinander ausgereichtet sind. Wichtig ist, dass im umgekehrten Fall (Nicht-Verletzung des Sicherheitsbereiches) keiner der drei möglichen Ursachen vorliegen kann.

## Patentansprüche

1. Einrichtung zur Überwachung mindestens eines dreidimensionalen Sicherheitsbereichs mit mindestens einer Aufnahmevorrichtung (3), die auf einen, den Sicherheitsbereich (10, 11) umfassenden Überwachungsbereich gerichtet ist und Abbilder des Sicherheitsbereichs aufnimmt, und einer Auswertevorrichtung (9) zur Auswertung der von der Aufnahmevorrichtung (3) aufgenommenen Abbilder dahingehend, ob Personen oder Objekte in den Sicherheitsbereich eingedrungen sind, wobei mindestens ein Projektor (1, 1') in Bezug auf den Überwachungsbereich (10, 11) derart angeordnet ist, dass er den Sicherheitsbereich definierende Linien oder Muster (5, 7) als moduliertes Licht mit vorgegebener Frequenz projiziert und wobei die Auswertevorrichtung (9) die Abbilder hinsichtlich der Konfiguration der projizierten Linien oder Muster auswertet,
wobei die mindestens eine Aufnahmevorrichtung auf die vorgegebene Frequenz synchronisiert ist, wobei
die Auswertevorrichtung ausgebildet ist, aus aufeinanderfolgenden, von der mindestens einen Aufnahmevorrichtung aufgenommenen Abbildern ein binäres IstAbbild des Sicherheitsbereichs zu erstellen und mit einem für die mindestens eine Aufnahmevorrichtung bestimmten binären Soll-Abbild des Sicherheitsbereichs zu vergleichen, **dadurch gekennzeichnet, dass** die Auswertevorrichtung weiter ausgebildet ist, das binäre Soll-Abbild als virtuelles Soll-Abbild basierend auf den intrinsischen und extrinsischen Parametern der mindestens einen Aufnahmevorrichtung und bekannter Konfiguration des Sicherheitsbereich zu bestimmen.

2. Einrichtung nach Anspruch 1, **dadurch gekennzeichnet, dass** der mindestens eine Projektor und die mindestens eine Aufnahmevorrichtung ausgebildet sind, abwechselnd ein Abbild des Überwachungsbereichs mit projiziertem Sicherheitsbereich und ein Abbild des Überwachungsbereichs ohne projiziertem Sicherheitsbereich zu erstellen.

3. Einrichtung nach einem der Ansprüche 1 bis 2, **dadurch gekennzeichnet, dass** das binäre Ist-Abbild durch Addition bzw. Subtraktion der aufeinanderfolgenden Abbilder des Überwachungsbereichs mit und ohne projiziertem Sicherheitsbereich bestimmbar ist und eine Verletzung des Sicherheitsbereichs durch Addition bzw. Subtraktion des binären Ist-Abbilds und des binären virtuellen Soll-Abbildes bestimmbar ist.

4. Einrichtung nach einem der Ansprüche 1 bis 3, **dadurch gekennzeichnet, dass** das von dem mindestens einen Projektor (1, 1') projizierte Licht in der Helligkeit, vorzugsweise als mit der vorgegebenen Frequenz pulsierend und/oder Farbe moduliert ist.

5. Einrichtung nach einem der Ansprüche 1 bis 4, **dadurch gekennzeichnet, dass** die Linien oder Muster (5, 7) als von dem mindestens einen Projektor (1, 1') projizierte linienförmige Begrenzungen des Sicherheitsbereichs (10, 11) ausgebildet sind.

6. Einrichtung nach einem der Ansprüche 1 bis 5, **dadurch gekennzeichnet, dass** die Linien oder Muster (5, 7) zeitlich und/oder hinsichtlich ihrer Form und/oder hinsichtlich ihrer Darstellungsweise veränderbar sind.

7. Einrichtung nach einem der Ansprüche 1 bis 4, **dadurch gekennzeichnet, dass** der mindestens eine Projektor (1, 1') ausgebildet ist, zusätzlich zu den den Sicherheitsbereich (10,11) definierenden Linien oder Muster (5, 7) Informationen in Form einer Lichtschrift oder in Form von Lichtpiktogrammen zu projizieren.

8. Einrichtung nach einem der Ansprüche 1 bis 7, **dadurch gekennzeichnet, dass** der mindestens eine Projektor mehrere Sicherheitsbereiche (10, 11), die ineinander verschachtelt sind oder sich miteinander schneiden, projiziert.

9. Einrichtung nach einem der Ansprüche 1 bis 8, **dadurch gekennzeichnet, dass** das Licht des mindestens einen Projektors (1, 1') im Infrarotbereich liegt.

10. Einrichtung nach einem der Ansprüche 1 bis 9, **dadurch gekennzeichnet, dass** mehrere Aufnahmevorrichtungen (3) und/oder Projektoren über dem mindestens einen Sicherheitsbereich (10,11) angeordnet sind.

11. Einrichtung nach einem der Ansprüche 1 bis 10, **dadurch gekennzeichnet, dass** die Aufnahmevorrichtung(en) und/oder die Projektor(en) extrinsisch kalibriert sind.

12. Einrichtung nach einem der Ansprüche 1 bis 11, **dadurch gekennzeichnet, dass** die Auswerteeinrichtung eingerichtet ist, einen Defekt des mindestens einen Projektors, der mindestens einen Aufnahmeeinrichtung und/oder eine fehlerhafte Ausrichtung des Projektors und/oder der Aufnahmevorrichtung festzustellen, wenn der Sicherheitsbereich nicht durch Personen und/oder Objekte verletzt wird.

## Claims

1. A device for monitoring at least one three-dimensional safety area, said device comprising at least one capturing device (3) that is pointed at a monitored area enclosing the safety area (10, 11) and captures images of the safety area, and comprising an evaluation device (9) for evaluating the images captured by the capturing device (3) in order to determine whether people or objects have entered the safety area,
wherein at least one projector (1, 1') is arranged with respect to the monitored area (10, 11) in such a way that it projects lines or patterns (5, 7) defining the safety area in the form of modulated light at a predefined frequency, and wherein the evaluation device (9) evaluates the images with regard to configuration of the projected lines or patterns,
wherein the at least one capturing device is synchronised to the predefined frequency and the evaluation device is designed to generate, from succesive images captured by the at least one capturing device, a binary current image of the safety area and to compare it with a binary target image of the projected safety area determined for the at least one capturing device, **characterised in that** the evaluation device is further designed to determine the binary target image as a virtual target image based on intrinsic and extrinsic parameters of the at least one capturing device and configuration of the known projected safety area.

2. The device according to Claim 1, **characterised in that** the at least one projector and the at least one capturing device are designed to create, alternately, an image of the monitored area with projected safety area and an image of the monitored area without projected safety area.

3. The device according to one of Claims 1 to 2, **characterised in that** the binary current image can be determined by addition and subtraction of the successive images of the monitored area, with and without projected safety area, and a breach of the safety area can be determined by addition and subtraction of the binary current image and of the binary virtual target image.

4. The device according to one of Claims 1 to 3, **characterised in that** the light projected by the at least one projector (1, 1') is modulated in terms of brightness, preferably pulsed at the predefined frequency, and/or in terms of colour.

5. The device according to one of Claims 1 to 4, **characterised in that** the lines or patterns (5, 7) are formed as linear borders of the safety area (10, 11) projected by the at least one projector (1, 1').

6. The device according to one of Claims 1 to 5, **characterised in that** the lines or patterns (5, 7) are variable over time and/or in terms of their form and/or in terms of their presentation.

7. The device according to one of Claims 1 to 4, **characterised in that**, in addition to the lines or patterns (5, 7) defining the safety area (10, 11), the at least one projector (1, 1') is designed to project information in the form of a light script or in the form of light pictograms.

8. The device according to one of claims 1 to 7, **characterised in that** the at least one projector projects a plurality of safety areas (10, 11), which are nested one inside the other or intersect one another.

9. The device according to one of Claims 1 to 8, **characterised in that** the light of the at least one projector (1, 1') lies in the infrared range.

10. The device according to one of claims 1 to 9, **characterised in that** a plurality of capturing devices (3) and/or projectors are arranged above the at least one safety area (10, 11).

11. The device according to one of claims 1 to 10, **characterised in that** the capturing device(s) and/or the projector(s) are calibrated extrinsically.

12. The device according to one of Claims 1 to 11, **characterised in that** the evaluation device is designed to determine a defect of the at least one projector, the at least one capturing device and/or an incorrect alignment of the projector and/or the capturing device when the safety area is not breached by people and/or objects.

## Revendications

1. Equipement de surveillance d'au moins une zone de sécurité tridimensionnelle avec au moins un dispositif d'enregistrement (3) orienté vers une zone de surveillance comprenant la zone de sécurité (10, 11) et enregistrant des images de la zone de sécurité, et un dispositif d'analyse (9) pour l'analyse des images enregistrées par le dispositif d'enregistrement (3) afin de voir si des personnes ou des objets ont pénétré dans la zone de sécurité, au moins un projecteur (1, 1') étant disposé par rapport à la zone de surveillance (10, 11) de façon à ce qu'il projette des lignes ou des motifs (5, 7) définissant la zone de sécurité sous forme d'une lumière modulée avec une fréquence prédéterminée et le dispositif d'analyse (9) analysant les images en ce qui concerne la configuration des lignes ou motifs projetés,
l'au moins un dispositif d'enregistrement étant synchronisé sur la fréquence prédéterminée, le dispositif d'analyse étant conçu pour créer, à partir des images successives enregistrées par l'au moins un dispositif d'enregistrement, une image réelle binaire de la zone de sécurité et la comparer avec une image de consigne virtuelle déterminée pour l'au moins un dispositif d'enregistrement, **caractérisé en ce que** le dispositif d'analyse est en outre conçue pour déterminer l'image de consigne binaire en tant qu'image de consigne virtuelle sur la base sur les paramètres intrinsèques et extrinsèques de l'au moins un dispositif d'enregistrement et une configuration connue de la zone de sécurité.

2. Equipement selon la revendication 1, **caractérisé en ce que** l'au moins un projecteur et l'au moins un dispositif d'enregistrement sont conçus pour produire alternativement une image de la zone de surveillance avec la zone de sécurité projetée et une image de la zone de surveillance sans zone de sécurité projetée.

3. Dispositif selon l'une des revendications 1 à 2, **caractérisé en ce que** l'image réelle binaire peut être déterminée par addition ou soustraction des images successives de la zone de surveillance avec et sans zone de sécurité projetée et une pénétration dans la zone de sécurité peut être déterminée par addition ou soustraction de l'image réelle binaire et de l'image de consigne virtuelle binaire.

4. Dispositif selon l'une des revendications 1 à 3, **caractérisé en ce que** la lumière projetée dans la clarté par l'au moins un projecteur (1, 1') soit modulée de préférence de manière pulsée avec la fréquence prédéterminée et/ou la couleur prédéterminée.

5. Dispositif selon l'une des revendications 1 à 4, **caractérisé en ce que** les lignes ou motifs (5, 7) soient conçus comme des limitations linéaires de la zone de sécurité (10, 11) projetées par l'au moins un projecteur (1, 1').

6. Equipement selon l'une des revendications 1 à 5, **caractérisé en ce que** les lignes ou motifs (5, 7) soient variables dans le temps et/ou en ce qui concerne leur forme et/ou en ce qui concerne leur représentation.

7. Équipement selon l'une des revendications 1 à 4, **caractérisé en ce que** l'au moins un projecteur (1, 1') soit conçu pour projeter, en plus des lignes ou motifs (5, 7) délimitant la zone de sécurité (10, 11), des informations sous la forme d'une écriture lumineuse ou sous la forme de pictogrammes lumineux.

8. Équipement selon l'une des revendications 1 à 7, **caractérisé en ce que** l'au moins un projecteur projette plusieurs zones de sécurité (10, 11) imbriquées les unes dans les autres ou se chevauchant.

9. Équipement selon l'une des revendications 1 à 8, **caractérisé en ce que** la lumière de l'au moins un projecteur (1, 1') se trouve dans l'infrarouge.

10. Équipement selon l'une des revendications 1 à 9, **caractérisé en ce que** plusieurs dispositifs d'enregistrement (3) et/ou projecteurs soient disposés au-dessus de l'au moins une zone de sécurité (10, 11).

11. Équipement selon l'une des revendications 1 à 10, **caractérisé en ce que** le(s) dispositif(s) d'enregistrement et/ou le(s) projecteur(s) soient calibrés de manière extrinsèque.

12. Équipement selon l'une des revendications 1 à 11, **caractérisé en ce que** le dispositif d'analyse soit conçu pour constater un défaut de l'au moins un projecteur, de l'au moins un dispositif d'enregistrement et/ou une orientation erronée du projecteur et/ou du dispositif d'enregistrement lorsque des personnes et/ou des objets ne pénètrent pas dans la zone de sécurité.
